Europäisches Patentamt

European Patent Office

Office européen des brevets

(11) Publication number: **0 327 291**

**A1**

## (12) EUROPEAN PATENT APPLICATION

(21) Application number: 89300890.4

(22) Date of filing: 30.01.89

(51) Int. Cl.⁴ **A41D 27/24 , B29C 65/50**

(30) Priority: 30.01.88 GB 8802104

(43) Date of publication of application:
09.08.89 Bulletin 89/32

(84) Designated Contracting States:
AT BE CH DE ES FR GB GR IT LI LU NL SE

(71) Applicant: NO LIMIT SPORTSWEAR LIMITED
13/14 Merthyr Industrial Park,
Pentrebach Mid-Glamorgan CF48 4DR(GB)

(72) Inventor: Evans, William Edward
1 Taff Vale Edwardsville
Treharris Mid-Glamorgan(GB)
Inventor: Schofield, Mark John
172 New Road
Porthcawl Glamorgan(GB)
Inventor: Barton, Phillip
1 Hollybush Court Hollybush Road
Cyncoed Cardiff(GB)

(74) Representative: Lainé, Simon James et al
Wynne-Jones, Lainé & James Morgan
Arcade Chambers 33, St.Mary Street
Cardiff CF1 2AB(GB)

(54) Improvements relating to waterproof seams.

(57) A seam is made by bringing together the edge portions of two sheets (1,2) of flexible waterproof material in a cusped configuration and sandwiching between those portions a bead (7) of sealant and/or adhesive. The seam is then stitched, the stitches (5) passing through the bead. Heat and/or pressure is then applied to ensure that the sealant and/or works into all the interstices within the cusp, and at least partially into the stitch holes.

FIG.1.

EP 0 327 291 A1

## Improvements relating to Waterproof Seams

This invention relates to waterproof seams, primarily for garments, and for wetsuits in particular.

There have been various proposals for such seams, and many of them have been abandoned. The demands on wetsuit seams are high and the drawbacks of some examples are outlined in GB 2172905B, which suggests making a seam with an overlock stitch and then filling the resultant well or groove with a bead with suitable elasticity/recovery properties. This is a better construction than some, but there is difficulty in working the bead well into the groove. The latter has quite a sharp cusp, in cross-section, where the stitching pulls the edges together, and the bead material tends not to reach the stitching. The latter, of course, makes holes in the wetsuit material and, while initially minute, they can enlarge when the seam is stressed, and water can penetrate. Although the bead is there as a second barrier, any fault in its adhesion and the seam is no longer waterproof.

While nothing can be guaranteed to stay waterproof indefinitely, it is the aim of this invention further to improve such seams.

According to one aspect of the present invention there is provided a seam construction joining two sheets of flexible waterproof material together, the edge portions being joined face-to-face in a cusped configuration having interposed between their faces a bead of sealant and/or adhesive material penetrated by subsequently applied stitching which binds said edge portions together.

According to another aspect of the present invention there is provided a method of forming a seam joining two sheets of flexible waterproof material together, wherein the edge portions to be joined are brought together face-to-face in a cusped configuration, sandwiching between their faces a bead of sealant and/or adhesive material, and wherein stitching is then applied to bind said edge portions together.

Preferably, overlock stitching will be used.

The bead will conveniently be of a material that allows it to be formed into a cohesive band at ambient temperature but which can be made viscous by application of an energy source. Generally that will provide heat and the temperature attained will be greater than any temperature the seam could be expected to meet in ordinary usage. Thus, the band can be presented between said faces immediately prior to stitching, and the stitched seam is subsequently heated to render the band temporarily viscous. That will improve its intimacy with the edge portions and stitching, and it may even work its way at least partially into the holes made by the stitching. A suitable adhesive is that sold by the British company Borden Limited and known as Thermomelt 0870 and made by a French company TRL S.A.

But the bead material could be one that is susceptible to other forms of energy, such as vibration and in particular ultrasonic vibration, to become viscous. Both forms of energy could be applied.

Alternatively, or in addition, the bead may be of a material allowing it to be formed into a cohesive band at ambient temperature and atmospheric pressure, but which is flowable in a non-recoverable manner when subject to pressure above a predetermined limit. Thus the stitched seam may be passed through pressure rollers, for example, which will force the bead into the interstices of the seam. When appropriate, the rollers may also be heated and/or the seam might be subjected to other energy sources, such as microwaves.

The band, when presented, may have a cross-section substantially matching the cusped configuration and will then substantially fill the well or groove formed on one side of the seam, while not projecting to any significant extent beyond the other side. If, when the seam is complete, there is excess sealant or adhesive on this other side, it may be scraped or pared off, or wiped off if viscous and slow setting. However, a plain strip or band of slim rectangular section may be perfectly adequate and would be easier to handle and present.

The seam is primarily intended for a wetsuit, and so the waterproof material will have an elasticity and recovery properties suitable for a stretch garment. Neoprene alone, or neoprene with a nylon or polyester backing, is preferred. The sealant and/or adhesive material will then have compatible elasticity and recovery properties.

However, the seam could prove useful on other flexible fabric articles, such as waterproof bags or tents.

For a better understanding of the invention, one embodiment will now be described, by way of example, with reference to the accompanying drawing, in which:

Figure 1 is a diagrammatic perspective view of a seam of a wetsuit in the course of construction, and

Figure 2 is a cross-section of a bead of sealant and/or adhesive material as applied to the seam.

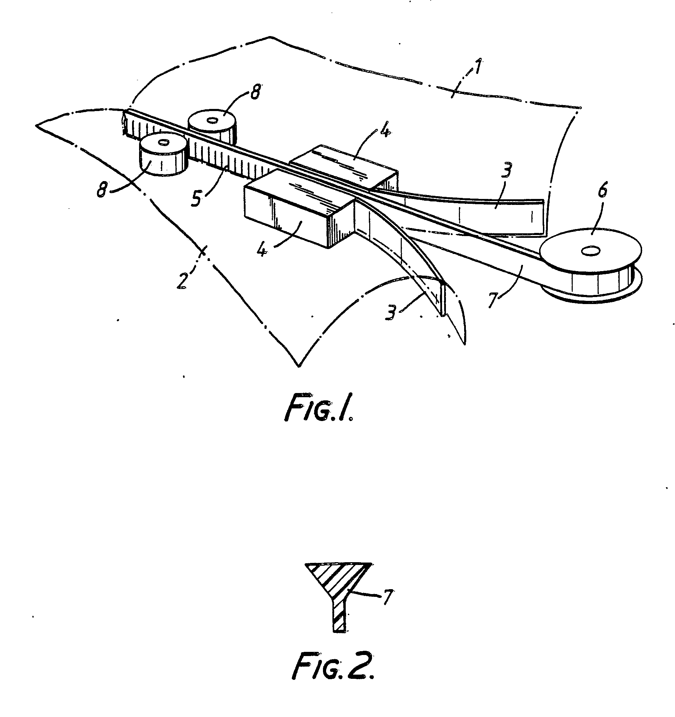

Two sheets 1 and 2 (shown in outline) of flexible waterproof material have their edge portions brought together in a cusped configuration by a guide 3 as they are moved together through a stitching device 4 downstream of the guide, which applies an overlock stitch 5. Upstream of the guides a reel 6 has a ribbon or band 7 of sealant and/or adhesive material, cohesive at ambient temperature and atmospheric pressure. It may need an interposed paper or plastic band to enable the turns to separate freely, but this could be led away by a take-up device (not shown) synchronised with the stitching device 4. The band 7 may have a cross-section as shown in Figure 2 to fit snugly between the edge portions of the sheets 1 and 2 as they approach the stitching device, and it will simply be pulled off the reel 6 by being pinched between those travelling edge portions. Thus the reel does not have to be driven.

The stitching passes through the edge portions and the band 7, and immediately downstream of the device 4 the seam is passed through the nip between rollers 8. These squeeze the band 7 through the sheets 1 and 2 so that the material is forced into intimate contact with the inside of the cusp. They may be heated, as mentioned above, there could be further roller pairs downstream to provide a graduated pressing, and they could be driven in synchronism with the stitching device. However, the rate at which stitching can be applied may substantially exceed the time needed for the pressure to become effective, and so it is quite likely that the stitching will be completed first along the whole seam, and then the seam will be squeezed by rollers or other means.

As an alternative or in addition to a pressure applying device, with appropriate material of the band 7 there could be an ultrasonic vibrator.

While this is appropriate for lengthy seams, for short ones, with awkward shapes and in awkward places, it may be necessary to do more manually: for example a length of sealing bead may have to be cut off and set in by hand. It may also be necessary to tack the seam prior to the main stitching, in which case the tacking can be removed after that and before the heat and/or pressure treatment. The latter will then ensure that the small holes left by the tacking will be filled by the sealant/adhesive.

If desired the finished seam could be externally covered by an adhesive tape to give a smoother finish and added protection.

## Claims

1. A seam construction joining two sheets (1, 2) of flexible waterproof material together, the edge portions being stitched together face-to-face in a cusped configuration and having a bead (7) of sealant and/or adhesive material within the cusp, characterised in that the bead (7) is interposed between the faces prior to the application of the stitching (5) which thus penetrates said bead (7).

2. A seam construction as claimed in claim 1, characterised in that the stitching (5) is overlock stitching.

3. A seam construction as claimed in claim 1 or 2, characterised in that the bead (7) is of a material allowing it to be formed into a cohesive band at ambient temperature but which can be made viscous by application of an energy source, such as by heating or vibration.

4. A seam construction as claimed in claim 1, 2 or 3, characterised in that the bead (7) is of a material allowing it to be formed into a cohesive band at ambient temperature and atmospheric pressure, but which is flowable in a non-recoverable manner when subject to pressure above a predetermined limit.

5. A seam construction as claimed in any preceding claim, characterised in that the waterproof material (1, 2) has an elasticity and recovery properties suitable for a stretch garment, and in that the sealant and/or adhesive material (7) has compatible elasticity and recovery properties.

6. A flexible fabric article such as a garment, bag or tent incorporating a seam as claimed in any preceding claim.

7. A method of forming a seam joining two sheets (1, 2) of flexible waterproof material together, wherein the edge portions to be joined are stitched together face-to-face in a cusped configuration, and a bead (7) of sealant and/or adhesive material, is provided within the cusp, characterised in that the bead is interposed between the faces prior to the application of the stitching (5), which thus penetrates said bead (7).

8. A method as claimed in claim 7, characterised in that overlock stitching (5) is applied.

9. A method as claimed in claim 7 or 8, characterised in that the bead (7) is presented at ambient temperature as a cohesive band between said faces immediately prior to stitching, and the stitched seam is subsequently subjected to energy such as heat or vibration to render the band temporarily viscous and thereby improve its intimacy with the edge portions and stitching (5).

10. A method as claimed in claim 7, 8 or 9 characterised in that the bead (7) is presented as a cohesive band between said faces immediately prior to stitching (4), and the stitched seam is subsequently subjected to pressure (8) above a predetermined limit to cause the band to flow in a non-recoverable manner and thereby improve its intimacy with the edge portions and stitching.

11. A method as claimed in any one of claims 7 to 10, characterised in that the band (7) when presented has a cross-section substantially matching the cusped configuration.

12. A seam or flexible fabric article, such as a garment, bag or tent, made by the method of any one of claims 7 to 11.

**FIG.1.**

**FIG.2.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | DE-A-2543047 (L. SEIDL) <br> * page 5 - 6; figures 1, 2 * | 1, 6, 7, 12 | A41D27/24 <br> B29C65/50 |
| A |  | 3, 5, 9 |  |
|  | --- |  |  |
| A,D | FR-A-2566320 (RIP CURL INTERNATIONAL PTY LTD) <br> * claims 1-6; figure 5 * <br> &GB-A-2172905 | 2, 6, 8, 11 |  |
|  | --- |  |  |
| A | DE-A-1947941 (BAT) <br> * page 11 - 13; figures 1-3 * | 2, 6, 8 |  |
|  | --- |  |  |
| A | DE-B-1106952 (ROLF WUNDERER & CO) <br> * column 2 - column 4; figures 1, 2 * | 1, 11 |  |
|  | ----- |  |  |
|  |  |  | TECHNICAL FIELDS SEARCHED (Int. Cl.4 ) |
|  |  |  | A41D <br> B29C <br> D05B <br> B68G |

The present search report has been drawn up for all claims

| Place of search | Date of completion of the search | Examiner |
|---|---|---|
| THE HAGUE | 11 MAY  89 | GARNIER F.M.A.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  & : member of the same patent family, corresponding document

EPO FORM 1503 03.82 (P0401)